# FASCICULE DE BREVET EUROPEEN

(11) **EP 0 591 911 B1**
(45) Date de publication et mention de la délivrance du brevet: **23.04.1997**
(21) Numéro de dépôt: 93116051.9
(22) Date de dépôt: 05.10.1993
(51) Int. Cl.: G01J 9/02, G01B 9/02

(54) **Interféromètre comprenant un ensemble intégré et une unité réfléchissante séparés l'un de l'autre par une région de mesure**
Interferometer bestehend aus einer integrierten Anordnung und einem reflektierenden Teil, die durch eine Messzone voneinander getrennt sind
Interferometer comprising an integrated arrangement and a reflecting part which are separated from each other by a measurement zone

(30) Priorité: 06.10.1992 FR 9212121
(43) Date de publication de la demande: 13.04.1994
(73) Titulaire: CSEM, Centre Suisse d'Electronique et de Microtechnique S.A., CH-2007 Neuchâtel (CH)
(72) Inventeur: Voirin, Guy, CH-2000 Neuchâtel (CH); Falco, Lucien, CH-2088 Cressier (CH)
(74) Mandataire: de Montmollin, Henri

(56) Documents cités:
- EP-A- 0 405 098
- WO-A-90/11484
- DE-A- 3 837 593
- DE-A- 3 901 592
- US-A- 3 820 902

## Description

La présente invention concerne un interféromètre comportant un ensemble intégré et une unité réfléchissante séparée de cet ensemble intégré par au moins une région de mesure. Cet interféromètre est destiné notamment à la mesure de l'évolution de l'indice de réfraction d'un milieu remplissant la région de mesure. Il trouve aussi une application dans la stabilisation de la longueur d'onde, dans ledit milieu, d'un faisceau de lumière provenant par exemple d'une diode laser.

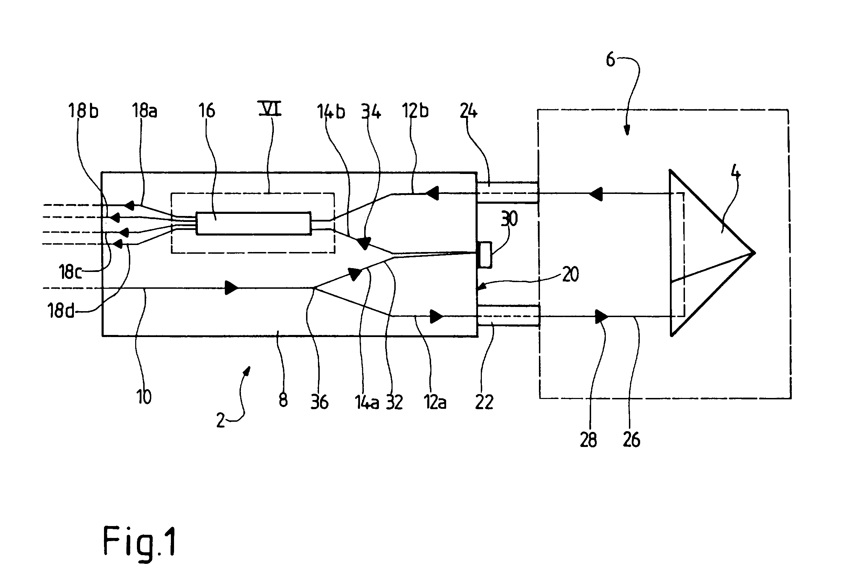

Un interféromètre, développé récemment dans les laboratoires de la Déposante et représenté à la figure 1, peut être utilisé pour exposer le but de l'invention.

Sur cette figure 1, on observe un interféromètre comprenant un ensemble intégré 2 et un miroir de mesure 4 séparé de l'ensemble intégré 2 par une région de mesure 6. On comprend ici par ensemble intégré un ensemble intégrant divers éléments optiques reliés les uns aux autres de manière fonctionnelle et supportés par une même unité. L'interféromètre représenté sur cette figure 1 est du type Mach-Zehnder. L'ensemble intégré 2 est formé par un substrat 8 à la surface duquel sont prévus un guide optique d'entrée 10, un guide optique de mesure comprenant une première branche 12a et une deuxième branche 12b, ainsi qu'un guide optique de référence comprenant une première branche 14a et une deuxième branche 14b. Cet ensemble intégré 2 comprend encore un démodulateur de phase 16. A la sortie de ce démodulateur 16, on obtient quatre signaux optiques distincts, lesquels sont transmis chacun séparément par quatre guides de sortie 18a à 18d à un détecteur non-représenté.

On notera que la longueur du guide optique de mesure est sensiblement identique à la longueur du guide optique de référence. Sur un des côtés latéraux 20 du substrat 8 sont prévues des lentilles de transition 22 et 24. Ces lentilles 22 et 24 sont situées sur un trajet optique de mesure 26. La première lentille 22 sert à collimater un faisceau lumineux de mesure 28 susceptible de se propager dans le guide optique de mesure. La deuxième lentille 24 sert à focaliser le faisceau lumineux de mesure 28 dans la branche 12b du guide optique de mesure après que ce faisceau lumineux de mesure 28 ait été renvoyé par le miroir de mesure 4.

On notera ici que le miroir de mesure 4 est formé par un rétroréflecteur ayant la forme d'un coin de cube creux et que les lentilles de transition 22 et 24 sont formées par des lentilles GRIN autofocalisatrices présentant un gradient d'indice.

Les deux branches 14a, 14b du guide optique de référence se rejoignent dans le plan défini par la face latérale 20 du substrat 8. A cet endroit, un miroir de référence 30 est prévu. On notera que les branches 14a et 14b du guide optique de référence forment conjointement avec le miroir de référence 30 un trajet optique de référence 32 pour un faisceau lumineux de référence 34 susceptible de se propager dans le guide de référence 14. Le guide de mesure 12 et le guide de référence 14 sont les deux issus d'une même origine 36 définissant une extrémité du guide d'entrée 10.

Le trajet optique de mesure et le trajet optique de référence définissent respectivement un chemin optique de mesure et un chemin optique de référence. Le chemin optique est définit par l'intégrale mathématique de l'indice de réfraction sur le trajet optique.

On remarquera qu'une mesure du type interférométrique, soit pour déterminer l'indice de réfraction du milieu remplissant la région de mesure, soit pour stabiliser la longueur d'onde d'une source laser dans ce milieu, est une fonction de la différence de chemin optique entre le chemin optique de mesure et le chemin optique de référence. Ainsi, pour obtenir une mesure précise d'une caractéristique du milieu remplissant la région de mesure, il est premièrement nécessaire que la différence de la longueur entre le trajet optique de mesure et le trajet optique de référence dans la région de mesure reste constante, et que deuxièmement le chemin optique de mesure soit invariablement identique au chemin optique de référence hors de cette région de mesure.

A cet égard, le dispositif décrit par la figure 1 présente plusieurs inconvénients. Premièrement, le miroir de mesure étant non-solidaire de l'ensemble intégré, ladite différence de longueur entre le trajet optique de mesure et le trajet optique de référence est susceptible de varier par suite d'un léger déplacement du miroir de mesure relativement à l'ensemble intégré. Deuxièmement, la présence des lentilles de transition 22 et 24 introduit dans l'ensemble intégré, entre les trajets optiques de mesure et de référence, une différence de chemin optique qui peut varier indépendamment de la variation de l'indice de réfraction du milieu de mesure, par exemple sous l'effet d'une variation de température de l'ensemble intégré.

Le but de la présente invention est de pallier les inconvénients décrits ci-dessus.

La présente invention a donc pour objet un interféromètre comprenant un ensemble intégré et un miroir de mesure aligné selon une direction déterminée relativement à l'ensemble intégré, le miroir de mesure avoisinant une région de mesure, cette dernière étant située entre ledit ensemble intégré et ledit miroir de mesure, ledit ensemble intégré comprenant un guide de référence, formant partiellement un trajet optique de référence conjointement avec un miroir de référence, et un guide de mesure formant partiellement un trajet optique de mesure conjointement avec ledit miroir de mesure, un faisceau lumineux de référence et un faisceau lumineux de mesure étant respectivement susceptibles de se propager dans ledit guide de référence et ledit guide de mesure de manière que se produit l'interférence entre le faisceau lumineux de référence et le faisceau lumineux de mesure, ledit ensemble intégré comprenant des premiers moyens de transition situés sur ledit trajet optique de mesure et permettant audit faisceau lumineux de mesure de sortir hors dudit guide de mesure de telle manière qu'il peut se propager dans ladite région de mesure et être ensuite à nouveau injecté au moins partiellement dans ledit guide de mesure par lesdits premiers moyens de transition, ledit interféromètre étant caractérisé en ce que ledit miroir de mesure et ledit miroir de référence forment une seule et même unité de renvoi dudit faisceau de référence et dudit faisceau de mesure.

Il résulte de la caractéristique décrite ci-dessus que la différence de longueur entre le trajet optique de mesure et le trajet optique de référence reste constant dans le cas où l'unité de renvoi subit de légers déplacements relativement à l'ensemble intégré, cette différence de longueur entre le trajet optique de mesure et le trajet optique de référence étant définie uniquement par la géométrie de l'unité de renvoi. En choisissant des matériaux appropriés pour l'unité de renvoi, notamment peu sensibles aux variations de température, il est possible de garantir que ladite différence de longueur entre lesdits trajets optiques de mesure et de référence soit fixe et constante dans le temps.

Selon une autre caractéristique de l'invention, ledit ensemble intégré de l'interféromètre comprend un démodulateur de phase à l'entrée duquel aboutissent ledit guide de mesure et ledit guide de référence, ces deux derniers ayant des propriétés physiques et une longueur sensiblement identiques, ledit ensemble intégré comprenant des deuxièmes moyens de transition situés sur ledit trajet optique de référence, ces deuxièmes moyens de transition permettant audit faisceau de référence de sortir hors dudit guide de référence de telle manière qu'il peut se propager dans ladite région de mesure et être ensuite à nouveau injecté au moins partiellement dans ledit guide de référence par lesdits deuxièmes moyens de transition, ces deuxièmes moyens de transition définissant pour ledit faisceau lumineux de référence un chemin optique sensiblement identique au chemin optique défini par lesdits premiers moyens de transition pour ledit faisceau lumineux de mesure.

Il résulte de cette caractéristique que le chemin optique de référence est, dans ledit ensemble intégré, sensiblement identique au chemin optique de mesure. Ainsi, la mesure effectuée dans la région de mesure ne sera pas perturbée par exemple par un changement de température de l'ensemble intégré.

Selon un mode de réalisation spécifique de l'invention, les premiers et deuxièmes moyens de transition sont formés respectivement par des première et deuxième lentilles.

D'autres avantages de l'invention ressortiront encore mieux à la lecture de la description suivante, faite en référence aux dessins annexés donnés à titre d'exemple non limitatif, et dans lesquels :
- la figure 1, déjà décrite, représente un interféromètre développé antérieurement par la Déposante;
- la figure 2 représente schématiquement un premier mode de réalisation d'un interféromètre selon l'invention;
- la figure 3 est une vue en perspective d'une unité de renvoi telle que prévue dans le premier mode de réalisation de l'invention;
- la figure 4 est une vue de dessus d'une unité de renvoi telle que prévue dans une variante du premier mode de réalisation selon l'invention;
- la figure 5 représente schématiquement un deuxième mode de réalisation d'un interféromètre selon l'invention;
- la figure 6 représente schématiquement la configuration d'un démodulateur de phase tel que prévu à titre d'exemple dans les premier et deuxième modes de réalisation de l'invention;
- la figure 7 est un diagramme explicatif du fonctionnement du démodulateur de phase de la figure 6;
- la figure 8 représente une application d'un interféromètre selon l'invention dans laquelle la longueur d'onde d'un faisceau lumineux de travail provenant d'une diode laser est stabilisée dans une région de mesure.

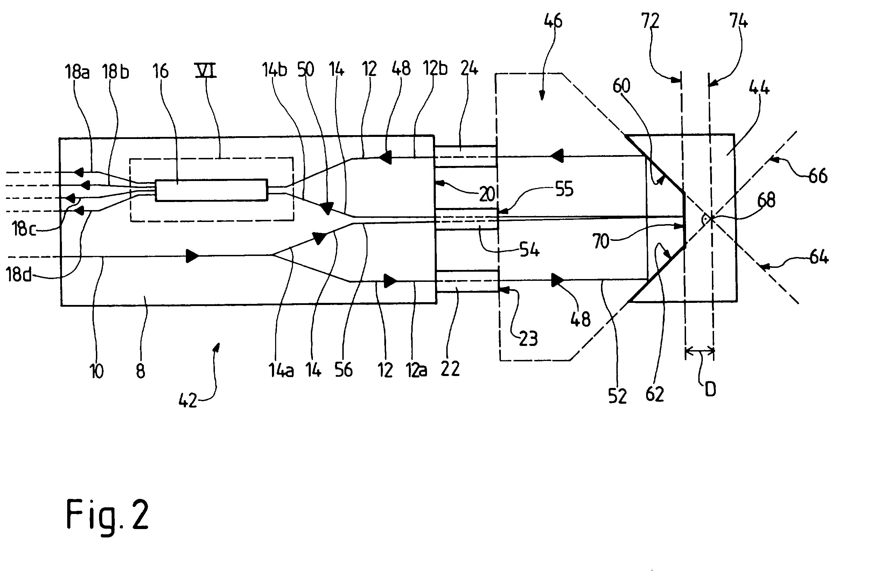

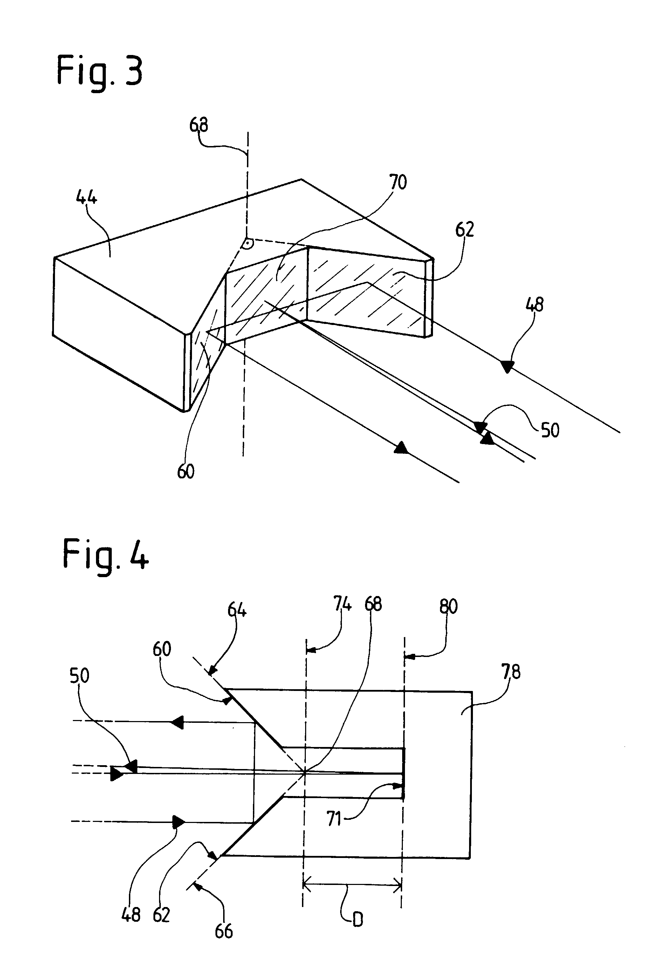

En se référant ci-après aux figures 2 et 3, on décrira un premier mode de réalisation d'un interféromètre selon l'invention, cet interféromètre étant du type Mach-Zehnder.

Sur la figure 2, l'interféromètre comprend un ensemble intégré 42 et une unité de renvoi 44 alignés selon une direction déterminée relativement à l'ensemble intégré 42, l'unité de renvoi avoisinant une région de mesure 46, cette dernière étant située entre l'unité de renvoi 44 et l'ensemble intégré 42. Cet ensemble intégré 42 est formé par un substrat 8 à la surface duquel sont prévus un guide optique d'entrée 10, un guide optique de mesure 12 comprenant des première et deuxième branches 12a et 12b, ainsi qu'un guide optique de référence 14 comprenant des première et deuxième branches 14a et 14b. Les guides de mesure et de référence 12 et 14 aboutissent à un démodulateur de phase 16 dans lequel se produit l'interférence entre le faisceau lumineux de mesure 48 et le faisceau lumineux de référence 50 susceptibles de se propager respectivement dans la branche 12b du guide de mesure 12 et dans la branche 14b du guide de référence 14.

Sur la face latérale 20 du substrat 8 de l'ensemble intégré 42 sont prévues trois lentilles de transition sensiblement identiques. Les deux premières lentilles 22 et 24 sont situées sur le trajet optique de mesure 52, lequel est défini par ledit guide de mesure 12, les lentilles 22 et 24 et l'unité de renvoi 44 et selon lequel est susceptible de se propager un faisceau lumineux de mesure 48. La troisième lentille 54 est située sur le trajet optique de référence 56, lequel est défini par ledit guide de référence 14, la lentille 54 et l'unité de renvoi 44 et selon lequel est susceptible de se propager un faisceau lumineux de référence 50.

Chacune des lentilles définit un dioptre externe entre l'ensemble intégré 42 et la région de mesure 46. En particulier un dioptre externe 23 et un dioptre externe 55 sont formés respectivement par les lentilles 22 et 54. En suite, on notera que l'axe optique (non-représenté pour une raison de clarté du dessin) de la lentille 54 définit ladite direction d'alignement de l'ensemble intégré 42 et de l'unité de renvoi 44.

Les branches 14a et 14b du guide de référence 14 et la lentille 54 doivent être conçus de telle manière qu'un faisceau lumineux de référence issu de la branche 14a soit, après réflexion par l'unité de renvoi, réintroduit dans la branche 14b. Dans la pratique cela est réalisé lorsque les extrémités des branches 14a et 14b sont légèrement décalés angulairement par rapport à l'axe optique de la lentille 54.

Les trois lentilles 22, 24 et 54 sont par exemple des lentilles autofocalisatrices du type GRIN à gradient d'indice permettant une collimation des faisceaux lumineux de mesure et de référence 48 et 50 sortant des branches 12a et 14a des guides de mesure et de référence 12 et 14, ainsi qu'une focalisation de ces faisceaux lumineux de mesure et de référence 48 et 50 dans les branches 12b et 14b de ces guides optiques de mesure et de référence 12 et 14, après que ces faisceaux aient été réfléchis par l'unité de renvoi 44.

On notera ici que les lentilles peuvent dans un autre mode de réalisation (non-représenté) être formées directement sur le substrat 8 dans un prolongement continu des guides de mesure et de référence. Dans ce dernier cas, le terme lentille est un terme général pour un moyen de transition permettant à un faisceau lumineux de passer d'un guide optique à un milieu dans lequel il se propage de manière non-guidée et réciproquement. Ce moyen de transition peut aussi, dans un autre mode de réalisation (non-représenté), être formé par un réseau diffractant avec une fonction de collimation.

Pour ce qui concerne le faisceau de mesure 48, on remarquera qu'il emprunte la lentille 22 pour sortir de l'ensemble intégré 42 et la lentille 24 pour entrer à nouveau dans cet ensemble intégré 42 après avoir été renvoyé par l'unité de renvoi 44. En ce qui concerne le faisceau de référence 50, le passage entre l'ensemble intégré 42 et la région de mesure 46 est effectué par la lentille 54 aussi bien pour le faisceau sortant en direction de l'unité de renvoi que pour le faisceau entrant dans l'ensemble intégré après avoir été réfléchi par l'unité de renvoi 44.

La configuration des guides optiques de mesure et de référence 12 et 14 a été prévue de telle manière que la longueur de l'un soit sensiblement identique à la longueur de l'autre. Etant donné que les lentilles de couplage 22, 24 et 54 sont sensiblement identiques, le chemin optique de référence dans l'ensemble intégré et le chemin optique de mesure dans ce même ensemble intégré sont sensiblement identiques, les propriétés physiques des guides prévus à la surface du substrat 8 de l'ensemble intégré 42 étant similaires.

L'unité 44, qui a de préférence une structure monobloc, comprend des première et deuxième faces latérales réfléchissantes 60 et 62 destinées à réfléchir le faisceau de mesure 48, ces deux faces constituant un miroir de mesure et servant à former avec ledit guide optique de mesure 12 et les lentilles 22 et 24 le trajet optique de mesure 52. Ces première et deuxième faces 60 et 62 définissent respectivement un premier plan 64 et un deuxième plan 66, ces derniers ayant un angle d'intersection égal à 90° et définissant une droite d'intersection 68.

L'unité de renvoi 44 comprend encore une troisième face latérale réfléchissante 70 destinée à réfléchir le faisceau de référence 50 et constituant un miroir de référence. Cette troisième face 70 définit un plan 72 qui présente un angle d'intersection de 45° avec chacun desdits plans 60 et 62. L'unité de renvoi 44 est orientée de telle manière que l'axe optique de la lentille 54 définit un angle de 90° avec le plan 72.

L'unité de renvoi 44 du premier mode de réalisation décrit à la figure 2 est représenté en perspective à la figure 3. On remarquera encore que la troisième face 70 est située du côté des deux faces 60 et 62 relativement au plan 74 parallèle au plan 72 et comprenant la droite d'intersection 68.

La différence de chemin optique entre le chemin optique de mesure et le chemin optique de référence est donnée par deux fois l'indice de réfraction du milieu se trouvant dans la région de mesure 46 multiplié par la distance D, cette dernière correspondant à la distance séparant les plans 72 et 74. Ainsi, le résultat de l'interférence dans le démodulateur de phase 16 dépend seulement de la distance D donnée par la géométrie de l'unité de renvoi 44 et par l'indice de réfraction du milieu de mesure remplissant la région de mesure 46.

En se référant ci-après à la figure 4, on décrira une variante du premier mode de réalisation selon l'invention (seule l'unité de renvoi est représentée ici) dans laquelle l'unité de renvoi 78 a une forme géométrique différente de l'unité de renvoi 44 décrite dans les figures 2 et 3.

Sur cette figure 4, la troisième face latérale réfléchissante 71 définit un plan 80 toujours parallèle audit plan 74 et est située de l'autre côté des faces 60 et 62 relativement à ce plan 74.

Ce mode de réalisation particulier de l'unité de renvoi selon l'invention présente l'avantage de permettre la sélection d'une distance D spécifique indépendamment des autres dimensions de l'unité de renvoi 78, si ce n'est la profondeur de cette unité de renvoi. Il est ainsi par exemple possible d'obtenir une différence de chemin optique, entre le chemin optique de mesure et le chemin optique de référence, supérieure à ce que peut permettre la réalisation décrite à la figure 3. Ceci peut être avantageux pour augmenter la précision de la mesure de l'indice de réfraction du milieu mesuré.

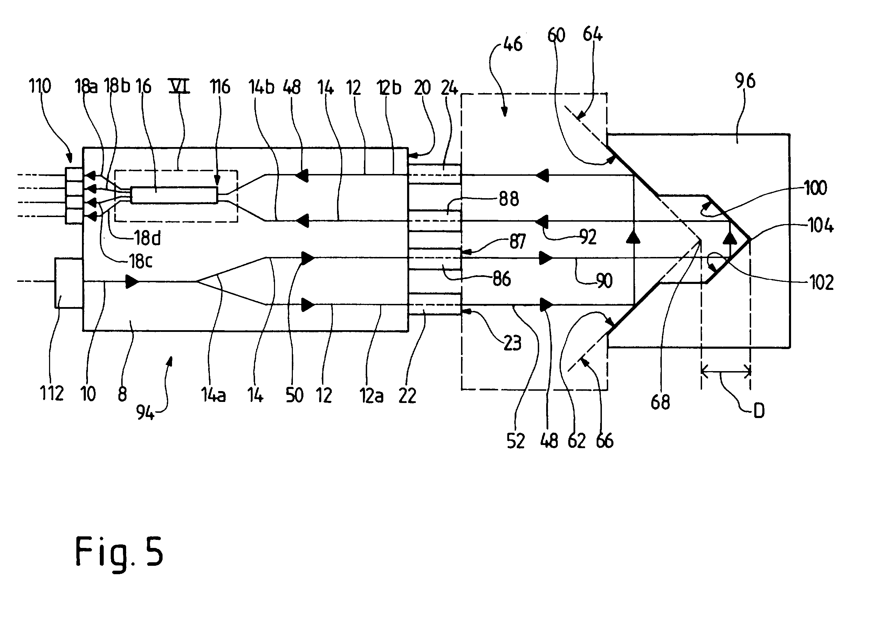

En se référant ci-après à la figure 5, on décrira un deuxième mode de réalisation d'un interféromètre selon l'invention.

Sur cette figure 5, les références déjà décrites ne seront pas à nouveau décrites ici en détail. Un avantage de ce deuxième mode de réalisation relativement au premier mode de réalisation selon l'invention réside dans une symétrie parfaite entre les deux branches 12a et 12b du guide optique de mesure 12 et respectivement les deux branches 14a et 14b du guide optique de référence 14. En particulier, la partie terminale des branches 14a et 14b du guide optique de référence 14 sont parallèles. Pour réaliser cette configuration, deux lentilles 86 et 88 sont disposées sur le trajet optique de référence 90. La lentille 86 sert à collimater le faisceau lumineux de référence 92 sortant de l'ensemble intégré 94. Cette lentille 86 définit un dioptre externe 87 entre ledit ensemble intégré et la région de mesure 46. La lentille 88 sert à focaliser dans le guide de référence le faisceau 92 entrant dans l'ensemble intégré 94 après avoir été réfléchi par l'unité de renvoi 96.

L'unité de renvoi 96 comprend, comme dans le cas du premier mode de réalisation, deux faces 60 et 62 destinées à réfléchir le faisceau de mesure 48 et formant un miroir de mesure. Ensuite, il est prévu deux autres faces latérales réfléchissantes 100 et 102 destinées à réfléchir le faisceau lumineux de référence 92 et formant un miroir de référence. Ces faces 100 et 102 s'interceptent l'une l'autre selon une droite d'intersection 104 et définissent un angle d'intersection de 90°. Les faces 100 et 102 sont respectivement parallèles aux faces 60 et 62.

La distance D entre la droite d'intersection 68 et la droite d'intersection 104 correspond à la moitié de la différence de longueur entre le trajet optique de mesure 52 et le trajet optique de référence 90. La valeur de la distance D dépend uniquement de la configuration donnée à l'unité de renvoi 96. Il est ainsi possible de choisir une distance D prédéterminée qui répond de manière optimale à l'application choisie pour l'interféromètre selon ce deuxième mode de réalisation.

Ce deuxième mode de réalisation présente encore d'autres avantages par rapport au premier mode de réalisation décrit ci-avant par le fait que le faisceau lumineux de mesure 48 et le faisceau de référence 92 se propagent de manière parallèle entre l'ensemble intégré 94 et l'unité de renvoi 96. Ainsi, il est possible de déplacer l'unité de renvoi 96 relativement à l'ensemble intégré 94 sans pour autant diminuer la précision de la mesure. Ensuite, étant donné que le faisceau de référence sortant et le faisceau de référence entrant dans l'ensemble intégré 94 sont parallèles et non-superposés, et que le moyen de transition entre l'ensemble intégré 94 et la région de mesure 46 pour le faisceau de référence sortant est différent du moyen de transition prévu pour le faisceau de référence entrant dans l'ensemble intégré 94 après avoir été réfléchi par l'unité de renvoi 96, le faisceau de référence arrivant dans le démodulateur de phase 16 présente une amplitude sensiblement égale à l'amplitude du faisceau de mesure entrant dans ce même démodulateur de phase 16, ce qui est avantageux pour la détection du résultat de l'interférence. De plus, il est sans autre possible dans une variante (non-représentée) de ce mode de réalisation de prévoir que le miroir de mesure et le miroir de référence forment respectivement des premier et second rétroréflecteurs en coin de cube creux, le premier rétroréflecteur présentant une ouverture pour permettre au faisceau de référence d'atteindre le second rétroréflecteur.

On notera que sur cette figure 5, un ensemble 110 de quatre détecteurs est prévu sur une des faces latérales du substrat de l'ensemble intégré 94. De même, une diode laser 112 est prévue sur cette face latérale.

On remarquera que deux détecteurs sont suffisants pour analyser le résultat de l'interférence si les signaux qui aboutissent sur ces détecteurs sont en quadrature de phase.

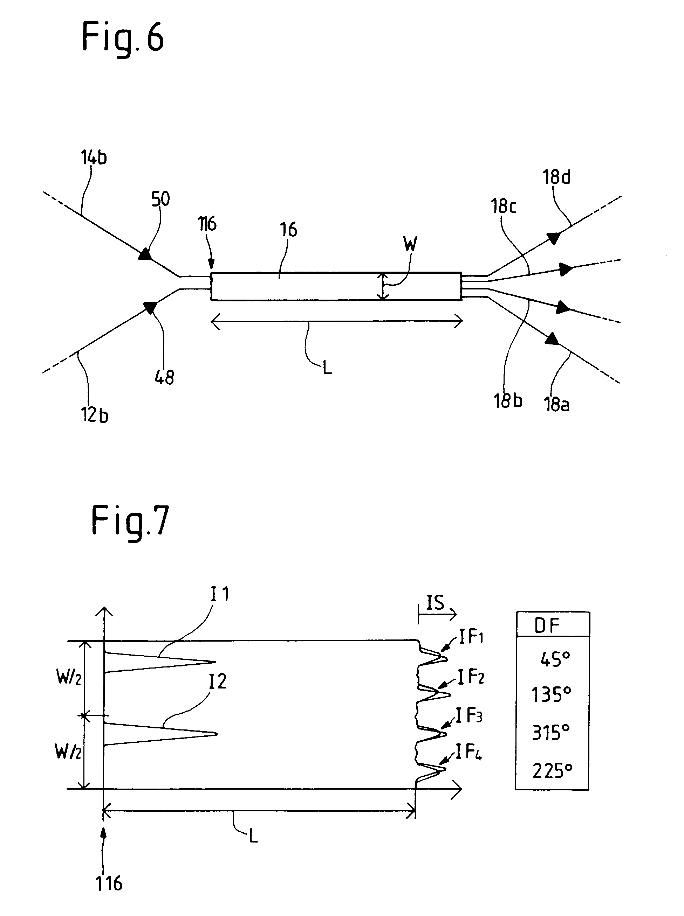

En se référant ci-après aux figures 6 et 7, on décrira plus précisément le démodulateur de phase 16.

On notera ici que le mode de réalisation choisi pour l'élément optique d'interférence est nullement limitatif. On trouvera d'autres exemples dans l'article "Integriert optisches Michelson-Interferometer mit Quadratur-demodulation im Glas zur Messung von Verschiebewegen" paru dans la revue : Technisches Messen 58 (1991) 4, pages 152 à 157, R. Oldenbourg Verlag. On trouvera aussi dans cet article des techniques de production de l'ensemble intégré décrit ci-avant, ainsi qu'un interféromètre de Michelson intégré de l'art antérieur.

Sur la figure 6, le démodulateur de phase 16 est formé par un guide d'ondes plan, de forme sensiblement rectangulaire, ayant une largeur W et une longueur L. Ce guide d'ondes plan est un guide multimode ayant la propriété de former des images multiples à partir d'une distribution lumineuse incidente.

Dans le mode de réalisation décrit aux figures 6 et 7, le faisceau de lumière se propageant dans la branche 14b du guide de référence 14 présente à l'entrée 116 du démodulateur de phase une distribution en intensité lumineuse I1, alors que le faisceau lumineux se propageant dans la branche 12b du guide de mesure 12 présente à l'entrée 116 de ce démodulateur 16 une distribution lumineuse I2. Lesdits faisceaux se propageant dans les guides de mesure et de référence 12 et 14 sont injectés à l'entrée 116 du démodulateur 16 à des endroits bien spécifiques de telle manière que chacune des distributions en intensité lumineuse I1 et I2 forment à une distance L quatre images d'intensité IS moindre. La distance L est définie par la largeur W, par l'indice de réfraction N du milieu formant le démodulateur 16 et par la longueur d'onde λ des faisceaux lumineux se propageant dans ce même démodulateur. La relation mathématique reliant la longueur L à ces divers paramètres est donnée par : L = NW²/λ . A la distance L, les deux faisceaux incidents I1 et I2 forment chacun quatre images se superposant aux quatres images de l'autre pour former quatre interférences spécifiques IF1, IF2, IF3 et IF4 dont l'intensité est une fonction du déphasage ϕ entre les deux faisceaux incidents.

Sur la figure 7, on a choisi de représenter en sortie du démodulateur, non pas les réels produits d'interférence, mais les contributions respectives en intensité de chacun des signaux d'entrée I1 et I2. En fait les contributions respectives sont combinées vectoriellement avec une loi de phase donnée pour fournir sur les quatre sorties des produits d'interférence représentatifs de la relation de phase des signaux d'entrée.

Sur la figure 7 est encore donnée la différence de phases DF, engendrée lors de la propagation dans le démodulateur 16, des deux distributions lumineuses Il et I2. On remarquera que cette différence de phases DF engendrée par le démodulateur 16 est un multiple de 90°. Si on effectue un changement des axes de référence conventionnels du cercle trigonométrique par une rotation de 45°, l'interférence IF1 fournit une intensité lumineuse variant selon (1 + cos ϕ), ϕ étant le déphasage entre les deux faisceaux incidents, alors que les interférences IF2, IF3 et IF4 fournissant une intensité lumineuse variant respectivement selon (1 - sin ϕ), (1 + sin ϕ) et (1 - cos ϕ). On notera que la mesure de l'intensité de l'interférence IF1 et de l'interférence IF2 est suffisante pour suivre un défilement de franges d'interférence et pour en déterminer le sens. Cependant, le fait de travailler avec les quatre superpositions d'images permet d'augmenter le contraste du résultat de l'interférence et d'obtenir un résultat traité avec une valeur moyenne égale à zéro.

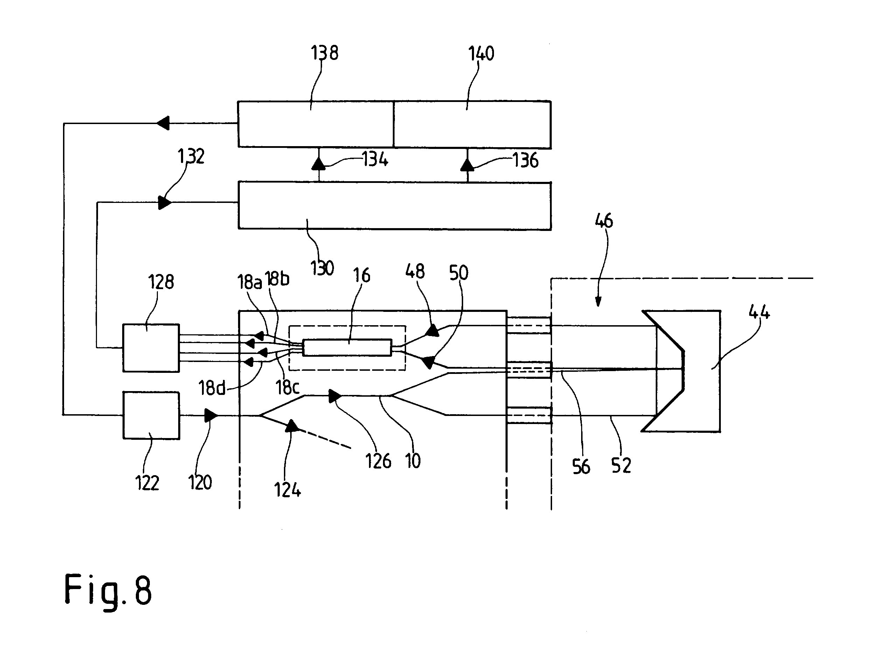

En se référant ci-après à la figure 8, on décrira une application possible pour un interféromètre selon l'invention.

Les références déjà décrites dans le premier mode de réalisation d'un interféromètre selon l'invention décrit ci-avant ne seront pas à nouveau commentées sur la figure 8. Sur cette dernière, un faisceau d'entrée 120 provient d'une source laser 122 et est ensuite séparé en deux faisceaux, le premier de ces faisceaux formant un faisceau de travail 124 et le second de ces faisceaux formant un faisceau de contrôle 126 qui se propage alors dans ledit guide optique d'entrée 10 du premier mode de réalisation de l'invention.

L'interféromètre selon l'invention est utilisé ici pour stabiliser la longueur d'onde dans le milieu remplissant la région de mesure 46. Pour ce faire, le résultat de l'interférence entre le faisceau de mesure 48 et le faisceau de référence 50 interférant dans le démodulateur de phase 16 est transmis par les guides optiques de sortie 18a, 18b, 18c et 18d à des moyens de détection 128.

Le résultat de l'interférence détectée par les moyens de détection 128 est ensuite transmis à une électronique 130 servant à traiter un signal 132 représentatif du résultat de l'interférence. L'électronique 130 engendre au moins deux signaux 134 et 136, le premier signal 134 étant transmis à une unité 138 de réglage de l'intensité du courant fourni au laser 122 et le deuxième signal 136 étant fourni à une unité 140 servant à régler la température du laser 122, par exemple au moyen d'un élément Peltier. On notera que, dans l'application décrite ici, l'unité laser 122 utilisée est formée par une diode laser, laquelle engendre un faisceau lumineux avec une fréquence variable en fonction du courant d'alimentation et de la température du milieu actif de cette diode laser.

L'unité 130 de traitement du signal 132 représentatif du résultat de l'interférence dans le démodulateur 16 est agencée de manière que les signaux 134 et 136 qu'elle fournit respectivement aux unités 138 et 140 ont pour fonction de maintenir constant le déphasage entre les faisceaux 48 et 50 interférant dans le démodulateur 16. Etant donné que, dans l'interféromètre selon l'invention utilisé dans cette application, le déphasage dépend uniquement de la différence de chemin optique entre le chemin optique de mesure et le chemin optique de référence, laquelle est donnée uniquement par la géométrie de l'unité de renvoi 44 et par l'indice de réfraction du milieu remplissant la région de mesure 46, l'asservissement de la valeur du déphasage entre les deux faisceaux lumineux 48 et 50 à une valeur de consigne donnée correspond à un asservissement de la longueur d'onde dans le milieu remplissant la région de mesure 46 à cette valeur de consigne. Le système décrit ici permet donc de fournir un faisceau de travail 124 ayant, dans un milieu semblable au milieu remplissant la région de mesure 46, une longueur d'onde dont la valeur reste constante dans le temps, même si l'indice de réfraction du milieu varie.

## Revendications

1. Interféromètre comprenant un ensemble intégré (42; 94) et un miroir de mesure (60, 62) aligné selon une direction déterminée relativement à l'ensemble intégré, le miroir de mesure avoisinant une région de mesure (46), cette dernière étant située entre ledit ensemble intégré et ledit miroir de mesure, ledit ensemble intégré comprenant un guide de référence (14), formant partiellement un trajet optique de référence (56; 90) conjointement avec un miroir de référence (70; 71; 100, 102), et un guide de mesure (12) formant partiellement un trajet optique de mesure (52) conjointement avec ledit miroir de mesure, un faisceau lumineux de référence (50; 92) et un faisceau lumineux de mesure (48) étant respectivement susceptibles de se propager dans ledit guide de référence et ledit guide de mesure de manière que se produit l'interférence entre le faisceau lumineux de référence (50) et le faisceau lumineux de mesure (48), ledit ensemble intégré comprenant des premiers moyens de transition (22, 24) situés sur ledit trajet optique de mesure et permettant audit faisceau lumineux de mesure de sortir hors dudit guide de mesure de telle manière qu'il peut se propager dans ladite région de mesure (46) et être ensuite à nouveau injecté au moins partiellement dans ledit guide de mesure par lesdits premiers moyens de transition, ledit interféromètre étant caractérisé en ce que ledit miroir de mesure (60, 62) et ledit miroir de référence (70; 71; 100, 102) forment une seule et même unité de renvoi (44; 78; 96) dudit faisceau de référence (50; 92) et dudit faisceau de mesure (48).

2. Interféromètre selon la revendication 1, caractérisé en ce que ledit ensemble intégré (42; 94) comprend un démodulateur de phase (16) à l'entrée duquel aboutissent ledit guide de mesure (12) et ledit guide de référence (14), ces deux derniers ayant des propriétés physiques et une longueur sensiblement identiques, ledit ensemble intégré comprenant des deuxièmes moyens de transition (54; 86, 88) situés sur le trajet optique de référence (56; 90), ces deuxièmes moyens de transition permettant audit faisceau de référence (50; 92) de sortir hors dudit guide de référence (14) de telle manière qu'il peut se propager dans ladite région de mesure (46) et être ensuite à nouveau injecté au moins partiellement dans ledit guide de référence par lesdits deuxièmes moyens de transition, ces deuxièmes moyens de transition définissant pour ledit faisceau lumineux de référence (50; 92) un chemin optique sensiblement identique au chemin optique défini par lesdits premiers moyens de transition (22, 24) pour ledit faisceau lumineux de mesure (48).

3. Interféromètre selon la revendication 2, caractérisé en ce que ladite unité de renvoi (44; 78; 96) est formée par un monobloc comprenant des première et deuxième faces (60, 62) latérales réfléchissantes, destinées à réfléchir ledit faisceau lumineux de mesure (48), ces première et deuxième faces définissant des premier et deuxième plans (64, 66) ayant un angle d'intersection sensiblement égal à 90° et définissant une première droite d'intersection (68), lesdits premiers moyens de transition étant formés par des première et deuxième lentilles (22 et 24) sensiblement identiques et situées sur ledit trajet optique de mesure (52), ladite première lentille servant à collimater le faisceau lumineux de mesure (48) sortant dudit ensemble intégré (42; 94), alors que ladite deuxième lentille sert à focaliser ce faisceau lumineux de mesure entrant dans ledit ensemble intégré après avoir été réfléchi par ladite unité de renvoi (44; 78; 96).

4. Interféromètre selon la revendication 3, caractérisé en ce que lesdits deuxièmes moyens de transition sont formés par une troisième lentille (54), ladite unité de renvoi (44; 78) comprenant une troisième face (70;71) latérale réfléchissante, destinée à réfléchir ledit faisceau de référence (50) et définissant un troisième plan (72; 80), ce dernier définissant sensiblement un angle d'intersection de 45° avec chacun desdits premier et deuxième plans (64, 66) et un angle de 90° avec l'axe optique de ladite troisième lentille, lequel définit ladite direction déterminée d'alignement.

5. Interféromètre selon la revendication 4, caractérisé en ce que ladite troisième face (70) est située du même côté que lesdites première et deuxième faces (60, 62) relativement à un quatrième plan (74) parallèle audit troisième plan (72) et comprenant ladite première droite d'intersection (68).

6. Interféromètre selon la revendication 4, caractérisé en ce que ladite troisième face (71) est située du côté opposé auxdites première et deuxième faces (60, 62) relativement à un quatrième plan (74) parallèle audit troisième plan (80) et comprenant ladite première droite d'intersection (68).

7. Interféromètre selon la revendication 3, caractérisé en ce que ladite unité de renvoi (96) comprend des troisième et quatrième faces (100, 102) latérales réfléchissantes formant un angle d'intersection de 90° et définissant une deuxième droite d'intersection (104), ces troisième et quatrième faces étant respectivement parallèles auxdites première et deuxième faces (60, 62) de ladite unité de renvoi (96), la deuxième droite d'intersection étant située à une distance non-nulle de ladite première droite d'intersection (68), lesdits deuxièmes moyens de transition étant formés par des troisième et quatrième lentilles (86, 88) sensiblement identiques à ladite première lentille (22) et situées sur ledit trajet optique de référence (90), ladite troisième lentille (86) servant à collimater ledit faisceau de référence (92) sortant dudit ensemble intégré (94), alors que ladite quatrième lentille (88) sert à focaliser ce faisceau de référence lorsqu'il entre dans ledit ensemble intégré après avoir été réfléchi par ladite unité de renvoi (96).

8. Interféromètre selon l'une quelconque des revendications précédentes, servant à stabiliser une longueur d'onde d'un faisceau lumineux de travail (124) dans un milieu remplissant ladite région de mesure (46), cet interféromètre étant caractérisé en ce que lesdits faisceaux de mesure (48) et de référence (50) sont issus d'un faisceau lumineux de contrôle (126), ce faisceau de contrôle et ledit faisceau de travail provenant d'une même source lumineuse (122) associée audit interféromètre, ce dernier étant caractérisé en ce qu'il est également associé à des moyens de stabilisation (128, 130, 138, 140) qui, en fonction d'une variation de l'indice de réfraction dudit milieu remplissant ladite région de mesure (46), ajustent la fréquence d'émission de ladite source lumineuse.

9. Interféromètre selon la revendication 8, caractérisé en ce que ladite source lumineuse (122) est une diode laser et en ce que lesdits moyens de stabilisation (128, 130, 138, 140) comprennent des moyens (130) pour régler le courant d'alimentation et la température de la diode laser (122) de manière à maintenir, dans ledit milieu, la valeur de ladite longueur d'onde constante dans le temps.

## Patentansprüche

1. Interferometer, umfassend eine integrierte Baugruppe (42; 94) und einen Meßspiegel (60, 62), der gemäß einer vorbestimmten Richtung relativ zu der integrierten Baugruppe ausgerichtet ist, welcher Meßspiegel an eine Meßregion (46) angrenzt, welch letztere sich zwischen der integrierten Baugruppe und dem Meßspiegel befindet, wobei die integrierte Baugruppe einen Referenzleiter (14), der teilweise eine optische Referenzbahn (56; 90) zusammen mit einem Referenzspiegel (70; 71; 100, 102) bildet, und einen Meßleiter (12), der teilweise eine optische Meßbahn (52) zusammmen mit dem Meßspiegel bildet, umfaßt, wobei ein Referenzlichtstrahl (50; 92) bzw. ein Meßlichtstrahl (48) sich in dem Referenzleiter bzw. Meßleiter ausbreiten können derart, daß sich eine Interferenz zwischen dem Referenzlichtstrahl (50) und dem Meßlichtstrahl (48) ergibt, welche integrierte Baugruppe erste Übergangsmittel (22, 24) in der optischen Meßbahn umfaßt, die dem Meßlichtstrahl ermöglichen, aus dem Meßleiter derart auszutreten, daß er sich in der Meßregion (46) ausbreiten kann und danach erneut mindestens teilweise in den Meßleiter durch die ersten Übergangsmittel injiziert werden kann, welches Interferometer dadurch gekennzeichnet ist, daß der Meßspiegel (60, 62) und der Referenzspiegel (70; 71; 100, 102) ein und dieselbe Rückwerfeinheit (44; 78; 96) des Referenzstrahls (50; 92) und des Meßstrahls (48) bilden.

2. Interferometer nach Anspruch 1, dadurch gekennzeichnet, daß die integrierte Baugruppe (42; 94) einen Phasendemodulator (16) umfaßt, an dessen Eingang der Meßleiter (12) und der Referenzleiter (14) anstossen, welche beiden letzteren im wesentlichen identische physikalische Eigenschaften und Länge besitzen, wobei die integrierte Baugruppe zweite Übergangsmittel (54; 86, 88) in der optischen Referenzbahn (56; 90) umfassen, welche zweiten Übergangsmittel es dem Referenzstrahl (50; 92) ermöglichen, aus dem Referenzleiter (14) derart auszutreten, daß er sich in der Meßregion (46) ausbreiten kann und danach erneut mindestens teilweise in den Referenzleiter über die zweiten Übergangsmittel injiziert werden kann, welche zweiten Übergangsmittel für den Referenzlichtstrahl (50; 92) einen optischen Weg definieren, der im wesentlichen identisch mit dem optischen Weg ist, der durch die ersten Übergangsmittel (22, 24) für den Meßlichtstrahl (48) definiert ist.

3. Interferometer nach Anspruch 2, dadurch gekennzeichnet, daß die Rückwerfeinheit (44; 78; 96) von einem Monoblock gebildet ist, umfassend erste und zweite reflektierende Seiten (60, 62), dazu bestimmt, den Meßlichtstrahl (48) zu reflektieren, welche ersten und zweiten Seiten erste und zweite Ebenen (64, 66) mit einem Schnittwinkel im wesentlichen gleich 90° unter Definition einer ersten Schnittgeraden (68) definieren, wobei die ersten Übergangsmittel von ersten und zweiten im wesentlichen Identischen Linsen (22 und 24) gebildet sind, die in der optischen Meßbahn (52) angeordnet sind, wobei die erste Linse zum Kollimieren des aus der integrierten Baugruppe (42; 94) austretenden Meßlichtstrahls (48) dient, während die zweite Linse der Fokalisierung dieses in die integrierte Baugruppe nach Reflexion durch die Rückwerfeinheit (44; 78; 96) eintretenden Meßlichtstrahls dient.

4. Interferometer nach Anspruch 3, dadurch gekennzeichnet, daß die zweiten Übergangsmittel von einer dritten Linse (54) gebildet werden, wobei die Rückwerfeinheit (44; 78) eine dritte reflektierende Seite (70;71) umfaßt, dazu bestimmt, den Referenzstrahl (50) zu reflektieren, und die eine dritte Ebene (72; 80) definiert, welche letztere im wesentlichen einen Schnittwinkel von 45° mit jeder der ersten und zweiten Ebenen (64, 66) definiert sowie einen Winkel von 90° mit der optischen Achse der dritten Linse, welche die genannte bestimmte Ausrichtrichtung definiert.

5. Interferometer nach Anspruch 4, dadurch gekennzeichnet, daß die dritte Seite (70) sich auf derselben Seite wie die erste und zweite Seite (60, 62) relativ zu einer vierten Ebene (74) befindet, die parallel zu der dritten Ebene (72) ist und die erste Schnittgerade (68) umfaßt.

6. Interferometer nach Anspruch 4, dadurch gekennzeichnet, daß die dritte Seite (71) sich auf einer Seite gegenüber der ersten und der zweiten Seite (60, 62) relativ zu einer vierten Ebene (74) befindet, die parallel zu der dritten Ebene (80) ist und die erste Schnittgerade (68) enthält.

7. Interferometer nach Anspruch 3, dadurch gekennzeichnet, daß die Rückwerfeinheit (96) dritte und vierte reflektierende Seiten (100, 102) umfaßt, die einen Schnittwinkel von 90° bilden und eine zweite Schnittgerade (104) definieren, wobei diese dritten und vierten Seiten jeweils parallel zu der ersten bzw. zweiten Seite (60, 62) der Rückwerfeinheit (96) sind, wobei die zweite Schnittgerade sich in einem von Null verschiedenen Abstand von der ersten Schnittgerade (68) befindet, wobei die zweiten übergangsmittel von dritten und vierten Linsen (86, 88) gebildet werden, die im wesentlichen identisch mit der ersten Linse (22) sind und sich auf der optischen Referenzbahn (90) befinden, welche dritte Linse (86) dem Kollimieren des aus der integrierten Baugruppe (94) austretenden Referenzstrahls (92) dient, während die vierte Linse (88) dem Fokalisieren dieses Referenzstrahls dient, wenn dieser in die integrierte Baugruppe nach seiner Reflexion durch die Rückwerfeinheit (96) eintritt.

8. Interferometer nach einem der vorangehenden Ansprüche, das dazu dient, eine Wellenlänge eines Arbeitslichtstrahls (124) in einem die Meßregion (46) füllenden Milieu zu stabilisieren, welches Interferometer dadurch gekennzeichnet ist, daß der Meßstrahl (48) und Referenzstrahl (50) von einem Steuerlichtstrahl (126) abgegeben werden, welcher Steuerstrahl und Arbeitslichtstrahl aus einer gleichen, dem Interferometer zugeordneten Lichtquelle (122) herrühren, wobei das Interferometer dadurch gekennzeichnet ist, daß es gleichermaßen Stabilisiermitteln (128, 130,138, 140) zugeordnet ist, die in Abhängigkeit von einer Veränderung des Brechungsindex des die Meßregion (46) füllenden Milieus die Emissionsfrequenz der Lichtquelle einstellen.

9. Interferometer nach Anspruch 8, dadurch gekennzeichnet, daß die Lichtquelle (122) eine Laserdiode ist und daß die Stabilisationsmittel (128, 130, 138, 140) Mittel (130) zum Regeln des Speisestroms und der Temperatur der Laserdiode (122) derart umfassen, daß in dem Milieu der Wert der Wellenlänge zeitlich konstant gehalten wird.

## Claims

1. Interferometer comprising an integrated arrangement (42; 94) and a measurement mirror (60, 62) which is aligned along a determined direction relative to the integrated arrangement, the measurement mirror adjoining a measurement region (46), the latter being placed between said integrated arrangement and said measurement mirror, said integrated arrangement comprising a reference guide (14), partially forming an optical reference path (56; 90) together with a reference mirror (70; 71; 100, 102), and a measurement guide (12) partially forming an optical measurement path (52) together with said measurement mirror, a reference light beam (50; 92) and a measurement light beam (48) which are capable of propagating respectively in said reference guide and in said measurement guide so that the interference between the reference light beam (50) and the measurement light beam (48) occurs, said integrated arrangement comprising first transition means (22, 24) placed in said optical measurement path and allowing said measurement light beam to leave said measurement guide in such a way that it may propagate in said measurement region (46) and then be injected again at least partially into said measurement guide by said first transition means, said interferometer being characterised in that said measurement mirror (60, 62) and said reference mirror (70; 71; 100, 102) form a one and single reflecting unit (44; 78; 96) of said reference beam (50; 92) and of said measurement beam (48).

2. Interferometer according to claim 1, characterised in that said integrated arrangement (42; 94) comprises a phase demodulator (16) at the input of which said measurement guide (12) and said reference guide (14) arrive, these two guides having physical properties and a length which are substantially identical, said integrated arrangement comprising second transition means (54; 86, 88) placed in said optical reference path (56; 90), these second transition means allowing said reference beam (50; 92) to leave said reference guide (14) in such a way that it may propagate in said measurement region (46) and may then be injected again at least partially into said reference guide by said second transition means, these second transition means defining an optical path for said reference light beam (50; 92) which is substantially identical to the optical path defined by said first transition means (22, 24) for said measurement light beam (48).

3. Interferometer according to claim 2, characterised in that said reflecting unit (44; 78; 96) is formed by a mono-bloc comprising first and second lateral reflecting faces (60, 62) intended to reflect said measurement light beam (48), said first and second faces defining first and second planes (64, 66) having an intersection angle which is substantially equal to 90° and defining a first intersection straight line (68), said first transition means being formed by first and second lenses (22 and 24) which are substantially identical and which are placed in said optical measurement path (52), said first lens serving to collimate the measurement light beam (48) which leaves said integrated arrangement (42; 94), whereas said second lens serves to focus this measurement light beam entering into said integrated arrangement after having been reflected by said reflecting unit (44; 78; 96).

4. Interferometer according to claim 3, characterised in that said second transition means are formed by a third lens (54), said reflecting unit (44; 78) comprising a third lateral reflecting face (70; 71), intended to reflect said reference beam (50) and defining a third plane (72; 80), this latter substantially defining an intersection angle of 45° with each of said first and second planes (64, 66) and an angle of 90° with the optical axis of said third lens, which defines said determined alignment direction.

5. Interferometer according to claim 4, characterised in that said third face (71) is placed on the same side as said first and second faces (60, 62) relative to a fourth plane (74) parallel to said third plane (72) and comprising said first intersection straight line (68).

6. Interferometer according to claim 4, characterised in that said third face (71) is situated on the opposite side of said first and second faces (60, 62) relative to a fourth plane (74) parallel to said third plane (80) and comprising said first intersection straight line (68).

7. Interferometer according to claim 3, characterised in that said reflecting unit (96) comprises third and fourth lateral reflecting faces (100, 102) forming an intersection angle of 90° and defining a second intersection straight line (104), these third and fourth faces being parallel to said first and second faces (60, 62) respectively of said reflecting unit (96), the second intersection straight line being situated at a distance which is none-zero from said first intersection straight line (68), said second transition means being formed by third and fourth lenses (86, 88) which are substantially identical to said first lens (22) and which are situated in said optical reference path (90), said third lens (86) serving to collimate said reference beam (92) leaving said integrated arrangement (94), while said fourth lens (88) serves to focus this reference beam while it is entering into said integrated arrangement after having been reflected by said reflecting unit (96).

8. Interferometer according to any one of the preceding claims, serving to stabilise a wavelength of a working light beam (124) in an environment filling said measurement region (46), this interferometer being characterised in that said measurement beam (48) and said reference beam (50) stem from a control light beam (126), this control light beam and said working beam coming from a same light source (122) associated to said interferometer, this latter being characterised in that it is also associated to stabilising means (128, 130, 138, 140) which, as a function of a variation of the reflection index of said environment filling said measurement region (46), adjust the emission frequency of said light source.

9. Interferometer according to claim 8, characterised in that said light source (122) is a laser diode and in that said stabilising means (128, 130, 138, 140) comprise means (130) for regulating the current supply and the temperature of the laser diode (122) in such a way so as to maintain time-constant the value of said wavelength in said environment.
